# EUROPEAN PATENT APPLICATION

(11) **EP 4 039 999 A1**
(43) Date of publication of application: **10.08.2022**
(21) Application number: 20873286.7
(22) Date of filing: 16.09.2020
(51) Int. Cl.: F16D 13/52, F16F 15/134

(54) **CLUTCH DEVICE**

(30) Priority: 01.10.2019 JP 2019181225
(71) Applicant: Kabushiki Kaisha F.C.C., Hamamatsu-shi, Shizuoka 431-1394 (JP)
(72) Inventor: KOBAYASHI, Yuki, Hamamatsu-shi, Shizuoka 431-1304 (JP)
(74) Representative: Zimmermann, Tankred Klaus
(86) International application number: PCT/JP2020/035139
(87) International publication number: WO 2021/065521

(57) **Abstract**

Provided is a clutch device capable of reducing vibration due to transmission of rotary drive force from a motor. The clutch device (100) includes a damper mechanism (105) between a clutch outer (101) and an input rotary body (102). The damper mechanism (105) includes an outer side plate (106), an input-side side plate (107), coupling pins (108), an inner ring spring (111), an outer ring spring (112), and damper members (113). The outer side plate (106) is formed in an annular flat plate shape. An inner peripheral side pressing portion (106a) is formed at an innermost peripheral portion of the outer side plate (106) facing the inner ring spring (111). In addition, an outer peripheral side pressing portion (106b) is formed at an outermost peripheral portion of the outer side plate (106) facing the outer ring spring (112). Further, the outer side plate (106) is formed with radial pressing portions (106c) extending in a radial direction between the inner peripheral side pressing portion (106a) and the outer peripheral side pressing portion (106b).

## Description

### TECHNICAL FIELD

The present invention relates to a clutch device configured to transmit rotary drive force of a driving shaft rotatably driven by a motor to a driven shaft driving a drive target or blocking such force transmission.

### BACKGROUND ART

Typically, in a vehicle such as a two-wheeled vehicle or a four-wheeled vehicle, a clutch device has been used for transmitting rotary drive force of a motor to a drive target or blocking such force transmission. The clutch device is arranged between the motor such as an engine and the drive target such as a wheel. Generally, the clutch device is configured such that multiple first friction plates to be rotated by the rotary drive force of the motor and multiple second friction plates coupled to the drive target are alternately arranged facing each other. In addition, the first friction plates and the second friction plates closely contact each other or separate from each other. With this configuration, the rotary drive force can be transmitted or blocked as necessary.

For example, a clutch device disclosed in Patent Literature 1 below includes, between a driven gear as an input rotary body configured to input rotary drive force of a motor and a clutch outer holding multiple first friction plates, a damper mechanism configured to elastically transmit the rotary drive force of the motor to the clutch outer. The damper mechanism described herein mainly includes a damper spring, a slide plate, a holding plate, a rivet, and a diaphragm spring.

### CITATION LIST

### PATENT LITERATURE

PATENT LITERATURE 1: JP-A-2010-151232

However, in the clutch device described in Patent Literature 1 above, vibration is inevitably caused upon transmission of the rotary drive force from the motor. For this reason, reduction in such vibration has been constantly demanded. Thus, the inventor(s) of the present invention has conducted intensive test and study on reduction in the vibration due to transmission of the rotary drive force from the motor. As a result, it has been found that the effect of reducing the vibration can be obtained by improvement of the above-described damper mechanism.

The present invention copes with the above-described problem. An object of the present invention is to provide a clutch device capable of reducing vibration due to transmission of rotary drive force from a motor.

### SUMMARY OF INVENTION

In order to achieve the object described above, a feature of the present invention is a clutch device for transmitting rotary drive force of a driving shaft to a driven shaft or blocking force transmission, including: an input rotary body to be rotatably driven together with the driving shaft by rotary drive of the driving shaft; a clutch outer holding a first friction plate arranged facing a second friction plate rotatably driven together with the driven shaft and rotatably driven by rotary drive of the input rotary body and formed in a bottomed tubular shape; and a damper mechanism allowing relative rotation of the input rotary body and the clutch outer and transmitting rotary drive force of the input rotary body to the clutch outer, in which the damper mechanism includes an outer side plate formed in an annular flat plate shape and arranged between the input rotary body and the clutch outer, an input-side side plate formed in an annular flat plate shape and arranged facing the outer side plate through the input rotary body, a coupling pin formed in a shape of a pin penetrating the input-side side plate, the input rotary body, and the outer side plate and coupling the input rotary body and the clutch outer, a ring spring formed in an annular flat plate shape, arranged between the input-side side plate and the clutch outer, and pressing the outer side plate against the input rotary body, and a damper member elastically coupling at least one of the input-side side plate or the outer side plate and the input rotary body, the ring spring is provided on each of an inner peripheral side and an outer peripheral side of the outer side plate in a radial direction thereof, and the outer side plate includes an inner peripheral side pressing portion pressed against the input rotary body and the clutch outer at a position facing the inner peripheral side ring spring, and an outer peripheral side pressing portion pressed against the input rotary body and the clutch outer at a position facing the outer peripheral side ring spring.

According to the feature of the present invention with the above-described configuration, the clutch device includes the outer side plate. The ring springs pressing the outer side plate against the input rotary body are provided on the inner peripheral side and the outer peripheral side of the outer side plate in the radial direction thereof. In addition, the outer side plate has the inner peripheral side pressing portion and the outer peripheral side pressing portion pressed against the input rotary body and the clutch outer at the positions facing the ring springs. With this configuration, the degree of close contact between the input rotary body and the outer side plate of the clutch device is improved on the inner peripheral side and the outer peripheral side in the radial direction of the outer side plate by each ring spring. Accordingly, non-uniformity in a load from the ring springs between the inner peripheral side and the outer peripheral side and non-uniformity in the coefficient of friction in the radial direction of the outer side plate are reduced. As a result, in the clutch device, the rotary drive force of the input rotary body is smoothly transmitted to the clutch outer. Accordingly, vibration due to transmission of the rotary drive force from the motor can be reduced.

Further, another feature of the present invention is that, in the clutch device, at the outer side plate, a total of an area of the inner peripheral side pressing portion and an area of the outer peripheral side pressing portion is equal to or greater than 40% of a total area of contact of the outer side plate with the input rotary body and the clutch outer.

According to the other feature of the present invention with the above-described configuration, in the clutch device, a contact surface pressure can be uniformized at the surfaces of the outer side plate contacting the input rotary body and the clutch outer. Thus, the non-uniformity in the load from the ring springs is reduced. Accordingly, the vibration due to transmission of the rotary drive force from the motor can be reduced.

Further, still another feature of the present invention is that, in the clutch device, the outer side plate includes a radial pressing portion continuously connecting the inner peripheral side pressing portion and the outer peripheral side pressing portion in the radial direction of the outer side plate.

According to the other feature of the present invention with the above-described configuration, the outer side plate of the clutch device has the radial pressing portion. The radial pressing portion continuously connects the inner peripheral side pressing portion and the outer peripheral side pressing portion in the radial direction of the outer side plate. Thus, the load from the ring springs can be applied along the radial direction of the outer side plate. As a result, the non-uniformity in the load from the ring springs can be more effectively reduced.

Further, still another feature of the present invention is that, in the clutch device, at the outer side plate, a total of the area of the inner peripheral side pressing portion, the area of the outer peripheral side pressing portion, and an area of the radial pressing portion is equal to or greater than 70% of the total area of contact of the outer side plate with the input rotary body and the clutch outer.

According to the other feature of the present invention with the above-described configuration, in the clutch device, the contact surface pressure can be further uniformized at the surfaces of the outer side plate contacting the input rotary body and the clutch outer. Thus, the non-uniformity in the load from the ring springs is reduced. Accordingly, the vibration due to transmission of the rotary drive force from the motor can be reduced.

Further, still another feature of the present invention is that, in the clutch device, the radial pressing portion is formed wider than a width of the inner peripheral side pressing portion and a width of the outer peripheral side pressing portion.

According to the other feature of the present invention with the above-described configuration, the multiple radial pressing portions of the clutch device are discontinuously formed along the radial direction of the outer side plate. Thus, the non-uniformity in the load from the ring springs in the radial direction of the outer side plate can be reduced.

Further, still another feature of the present invention is that, in the clutch device, adjacent two of the radial pressing portions in a circumferential direction of the outer side plate have different widths in the circumferential direction.

According to the other feature of the present invention with the above-described configuration, the radial pressing portions of the clutch device are configured such that adjacent two of the radial pressing portions in the circumferential direction of the outer side plate have different widths in the circumferential direction. Thus, the friction properties and lubricant oil behavior of each radial pressing portion in the circumferential direction can be changed. Accordingly, monotonous or uneven action of the friction properties upon sliding or stop of the outer side plate can be reduced. With this configuration, the friction properties can be improved across the entirety of the outer side plate.

Further, still another feature of the present invention is that, the coupling pin includes multiple coupling pins provided along the circumferential direction of the outer side plate, and the radial pressing portions are formed with identical shapes at identical positions among units, taking, as each unit, a portion between adjacent ones of the multiple coupling pins provided along the circumferential direction of the outer side plate.

According to the other feature of the present invention with the above-described configuration, the radial pressing portions of the clutch device are formed with the same shapes at the same positions among the units, taking, as each unit, the portion between adjacent ones of the multiple coupling pins provided along the circumferential direction of the outer side plate. Thus, friction properties and lubricant oil behavior between adjacent ones of the coupling pins in the circumferential direction can be changed. Accordingly, monotonous or uneven action of the friction properties upon sliding or stop of the outer side plate can be reduced while the friction properties are uniformized across the entirety of the outer side plate.

### BRIEF DESCRIPTION OF DRAWINGS

Fig. 1 is a sectional view showing the outline of an entire configuration of a clutch device according to one embodiment of the present invention in a clutch ON state;
Fig. 2 is a front view showing the outline of an external configuration of an outer side plate incorporated into the clutch device shown in Fig. 1.
Fig. 3 is a side view showing, by hatching in dark and light colors, an inner peripheral side pressing portion, an outer peripheral side pressing portion, radial pressing portions, and auxiliary pressing portions of the outer side plate shown in Fig. 2.
Fig. 4 is a view for describing action of pressing force when rotary drive force of an input rotary body is transmitted to a clutch outer through the outer side plate in the clutch device shown in Fig. 1.

### DESCRIPTION OF EMBODIMENTS

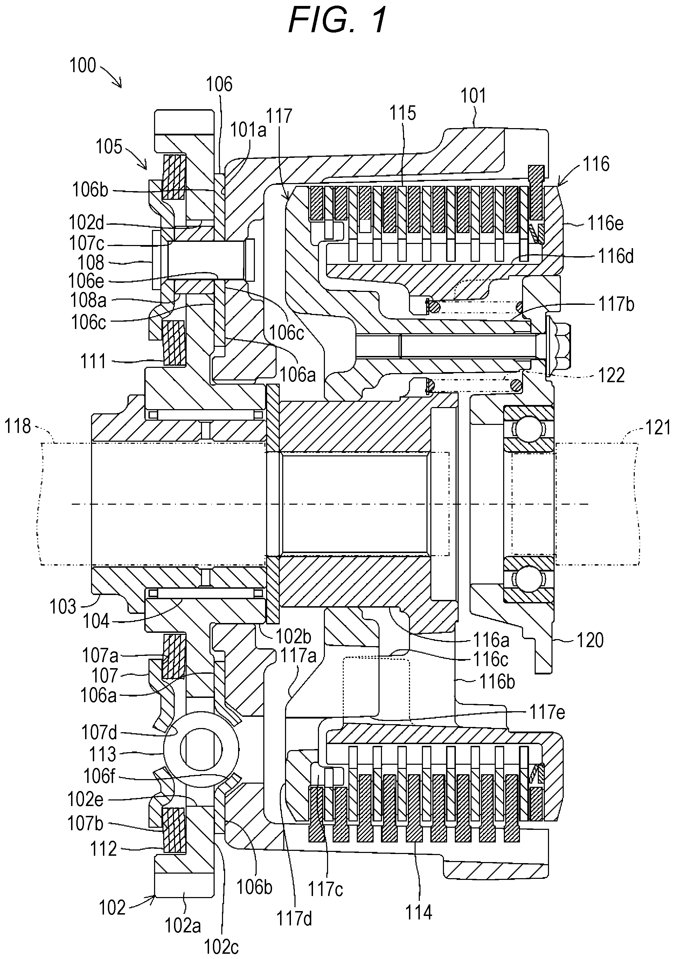

Hereinafter, one embodiment of a clutch device according to the present invention will be described with reference to the drawings. Fig. 1 is a sectional view showing the outline of an entire configuration of a clutch device 100 according to the present invention. The clutch device 100 is a mechanical device for transmitting drive force of an engine (not shown) as a motor to a wheel (not shown) as a drive target in a two-wheeled vehicle (a motorcycle) or blocking such force transmission. The clutch device 100 is arranged between the engine and a transmission (not shown).

### (Configuration of Clutch Device 100)

The clutch device 100 includes a clutch outer 101. The clutch outer 101 is a component for holding first friction plates 114 and transmitting the drive force from the engine to the first friction plates 114. The clutch outer 101 is formed in a bottomed cylindrical shape from an aluminum alloy material. More specifically, an internal gear-shaped spline is formed at a tubular portion of the clutch outer 101. The spline holds, by spline fitting, the multiple (ten in the present embodiment) first friction plates 114 such that the first friction plates 114 are displaceable along an axial direction of the clutch outer 101 and are rotatable integrally with the clutch outer 101.

A side surface 101a, which is a bottom portion of the bottomed cylindrical shape, of the clutch outer 101 on the left side as shown in the figure is coupled to an input rotary body 102 through a damper mechanism 105. The input rotary body 102 is a metal gear component, and is rotatably driven with the input rotary body 102 engaging with a drive gear which is coupled to a driving shaft (not shown), such as a crankshaft, to be rotatably driven by drive of the motor such as the engine. The input rotary body 102 is rotatably supported by a later-described shaft 118 through a sleeve 103 and a needle bearing 104. That is, the clutch outer 101 is rotatably driven integrally with the input rotary body 102 at a position concentric with the shaft 118 independently of the shaft 118. The input rotary body 102 mainly includes a tooth portion 102a, a boss portion 102b, and a projecting portion 102c.

The tooth portion 102a is a portion engaging with the drive gear to receive rotary drive force. The tooth portion 102a is formed in such a shape that recessed and raised portions are repeated along a circumferential direction. The boss portion 102b is a portion supporting the input rotary body 102 on the shaft 118. In addition, the boss portion 102b supports the clutch outer 101. The boss portion 102b is formed in a cylindrical shape extending in a direction perpendicular to the circumferential direction of the tooth portion 102a. An inner peripheral side of the boss portion 102b is fitted onto the sleeve 103 through the needle bearing 104. In addition, the clutch outer 101 is slidably fitted onto an outer peripheral side of the boss portion 102b.

The projecting portion 102c is a portion supporting the tooth portion 102a on the outer side of the boss portion 102b in a radial direction. In addition, the projecting portion 102c is coupled to the clutch outer 101. The projecting portion 102c is formed in an annular flat plate shape on the outer side of the boss portion 102b in the radial direction. The projecting portion 102c is formed with coupling pin insertion portions 102d and spring housing portions 102e.

The coupling pin insertion portion 102d is a portion through which a later-described coupling pin 108 penetrates. The coupling pin insertion portion 102d is formed in a long hole shape allowing swing of the coupling pin 108 in the circumferential direction. In the present embodiment, three coupling pin insertion portions 102d are formed at equal intervals along the circumferential direction of the input rotary body 102. Note that three or less or four or more coupling pin insertion portions may be provided, needless to say.

The spring housing portion 102e is a portion housing a later-described damper member 113. The spring housing portion 102e is formed in a long hole shape extending in the circumferential direction of the input rotary body 102. In this case, both end portions of the damper member 113 elastically contact both end portions of the spring housing portion 102e. In the present embodiment, two spring housing portions 102e are formed between adjacent ones of the three coupling pin insertion portions 102d along the circumferential direction of the input rotary body 102. Note that two or less or three or more spring housing portions 102e may be provided, needless to say.

The sleeve 103 is a component for supporting the input rotary body 102 on the shaft 118 through the needle bearing 104. The sleeve 103 is formed in a cylindrical shape from a metal material. The needle bearing 104 is a component for rotatably supporting the input rotary body 102 on an outer peripheral surface of the sleeve 103. The needle bearing 104 includes many elongated circular columnar bodies rolling in the circumferential direction on the outer peripheral surface of the sleeve 103, and is formed in a cylindrical shape.

The damper mechanism 105 is a component group for elastically transmitting rotary drive force of the input rotary body 102 to the clutch outer 101. The damper mechanism 105 mainly includes an outer side plate 106, an input-side side plate 107, the coupling pins 108, an inner ring spring 111, an outer ring spring 112, and the damper members 113.

As shown in Fig. 1, the outer side plate 106 is a component friction-sliding on the input rotary body 102. In addition, the outer side plate 106 is fixed to the clutch outer 101 with the coupling pins 108. With this configuration, the rotary drive force of the input rotary body 102 is transmitted to the clutch outer 101. The outer side plate 106 is formed in a circular ring flat plate shape from a metal material. In this case, the outer side plate 106 is formed to have an inner diameter corresponding to the inner ring spring 111 and an outer diameter corresponding to the outer ring spring 112. As described later, the inner ring spring 111 and the outer ring spring 112 are pressed against the input rotary body 102. In the present embodiment, the outer side plate 106 is formed to have an inner diameter corresponding to an outer peripheral portion of a plate surface of the inner ring spring 111 pressed against the input rotary body 102 and an outer diameter corresponding to an inner peripheral portion of a plate surface of the outer ring spring 112 pressed against the input rotary body 102.

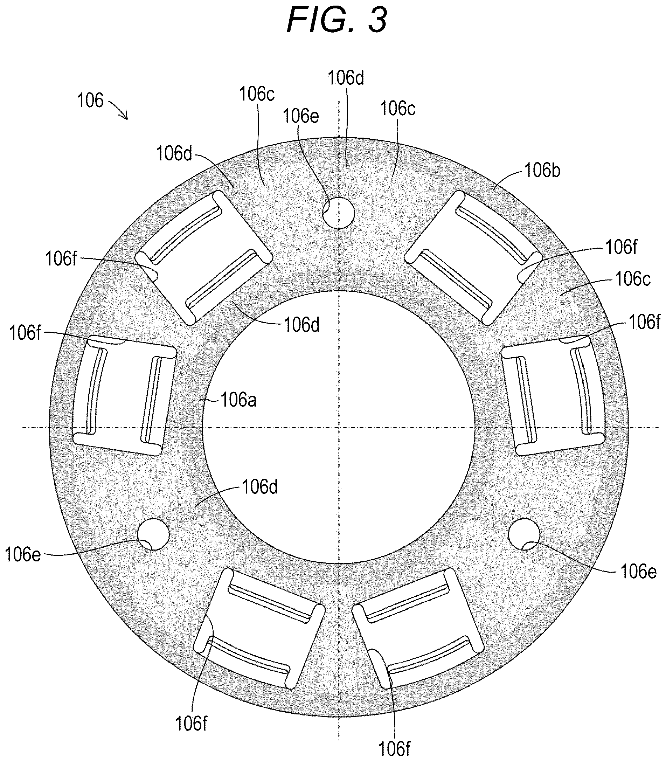

Thus, as shown in Fig. 3, at an inner peripheral portion of each plate surface of the outer side plate 106, a circular ring-shaped inner peripheral side pressing portion 106a is formed corresponding to the outer peripheral portion of the plate surface of the inner ring spring 111. The inner peripheral side pressing portion 106a is pressed against the projecting portion 102c of the input rotary body 102 and the side surface 101a of the clutch outer 101. Moreover, at an outer peripheral portion of each plate surface of the outer side plate 106, a circular ring-shaped outer peripheral side pressing portion 106b is formed corresponding to the inner peripheral portion of the plate surface of the outer ring spring 112. The outer peripheral side pressing portion 106b is pressed against the projecting portion 102c of the input rotary body 102 and the side surface 101a of the clutch outer 101.

Radial pressing portions 106c are formed at each plate surface of the outer side plate 106. The radial pressing portion 106c continuously connects the inner peripheral side pressing portion 106a and the outer peripheral side pressing portion 106b in the radial direction. Thus, the radial pressing portion 106c is pressed against the projecting portion 102c of the input rotary body 102 and the side surface 101a of the clutch outer 101. In this case, the radial pressing portion 106c is a region continuously connecting the inner peripheral side pressing portion 106a and the outer peripheral side pressing portion 106b in the radial direction. Thus, the radial pressing portion 106c is formed in such a fan shape that the width of the radial pressing portion 106c in the circumferential direction expands from the inner side to the outer side of the outer side plate 106 in the radial direction.

The multiple (nine in the present embodiment) radial pressing portions 106c are discontinuously formed by later-described coupling pin insertion portions 106e and later-described spring housing portions 106f. In this case, the radial pressing portions 106c include, as some of the nine radial pressing portions 106c arranged in the circumferential direction, radial pressing portions 106c having different circumferential widths from those of the other radial pressing portions 106c. Specifically, three of the radial pressing portions 106c having narrow circumferential widths are arranged at equal intervals in the circumferential direction such that each of these radial pressing portions 106c is positioned between adjacent ones of the remaining six radial pressing portions 106c having wide circumferential widths.

Moreover, each radial pressing portion 106c is formed to have a greater width than the width of a narrowest portion of the inner peripheral side pressing portion 106a in the circumferential direction and the width of a narrowest portion of the outer peripheral side pressing portion 106b in the circumferential direction. Taking, as a unit, a portion between adjacent ones of the three coupling pin insertion portions 106e provided along the circumferential direction of the outer side plate 106, the radial pressing portions 106c are formed in the same shapes at the same positions among the units.

Auxiliary pressing portions 106d are formed other than the inner peripheral side pressing portion 106a, the outer peripheral side pressing portion 106b, and the radial pressing portions 106c at each plate surface of the outer side plate 106. The auxiliary pressing portions 106d are pressed by the projecting portion 102c of the input rotary body 102 and the side surface 101a of the clutch outer 101.

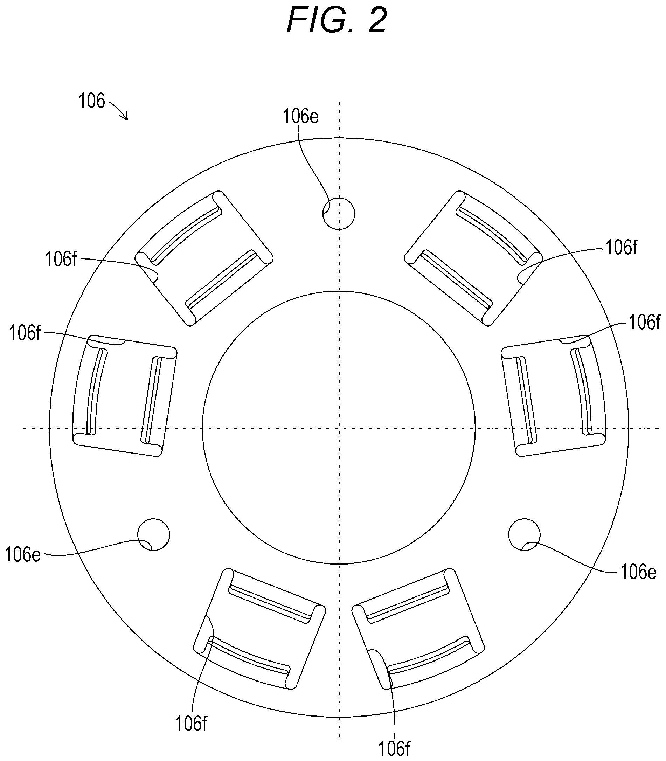

Note that the auxiliary pressing portions 106d are not shown in Fig. 1. Moreover, the inner peripheral side pressing portion 106a, the outer peripheral side pressing portion 106b, the radial pressing portions 106c, and the auxiliary pressing portions 106d are not shown in Fig. 2. Further, the inner peripheral side pressing portion 106a and the outer peripheral side pressing portion 106b are indicated by hatching in a dark color in Fig. 3. The radial pressing portions 106c are indicated by hatching in an intermediate dark color. The auxiliary pressing portions 106d are indicated by hatching in a light color.

The inner peripheral side pressing portion 106a, the outer peripheral side pressing portion 106b, the radial pressing portions 106c, and the auxiliary pressing portions 106d are formed on the same plane at each surface of the outer side plate 106. Moreover, the inner peripheral side pressing portion 106a, the outer peripheral side pressing portion 106b, and the radial pressing portions 106c are formed to have a greater total area than the total area of openings of the coupling pin insertion portions 106e and openings of the spring housing portions 106f as described later.

The inner peripheral side pressing portion 106a and the outer peripheral side pressing portion 106b are formed to have a size of equal to or greater than 40% of the total area of contact of the outer side plate 106 with the input rotary body 102 and the clutch outer 101, i.e., the total area of the inner peripheral side pressing portion 106a, the outer peripheral side pressing portion 106b, the radial pressing portions 106c, and the auxiliary pressing portions 106d. Moreover, the inner peripheral side pressing portion 106a, the outer peripheral side pressing portion 106b, and the radial pressing portions 106c are formed to have a size of equal to or greater than 70% of the total area of contact of the outer side plate 106 with the input rotary body 102 and the clutch outer 101, i.e., the total area of the inner peripheral side pressing portion 106a, the outer peripheral side pressing portion 106b, the radial pressing portions 106c, and the auxiliary pressing portions 106d.

The coupling pin insertion portions 106e and the spring housing portions 106f are formed at the outer side plate 106. The coupling pin insertion portion 106e is a portion through which the coupling pin 108 penetrates. The coupling pin insertion portion 106e includes a circular through-hole having the substantially same outer diameter as that of the coupling pin 108. In the present embodiment, three coupling pin insertion portions 106e are formed at equal intervals along the circumferential direction of the outer side plate 106. Note that three or less or four or more coupling pin insertion portions 106e may be provided, needless to say.

The spring housing portion 106f is a portion housing the damper member 113 housed in the spring housing portion 102e. The spring housing portion 106f is formed in a cover-equipped long hole shape covering part of the damper member 113 and extending in the circumferential direction of the outer side plate 106. In this case, both end portions of the damper member 113 elastically contact both end portions of the spring housing portion 106f. In the present embodiment, two spring housing portions 106f are formed between adjacent ones of the three coupling pin insertion portions 106e along the circumferential direction of the outer side plate 106. Note that two or less or three or more spring housing portions 106f may be provided, needless to say.

The input-side side plate 107 is a component for restricting displacement of the input rotary body 102 to a side (the left side as viewed in the figure) opposite to the outer side plate 106. The input-side side plate 107 is formed in a circular ring flat plate shape from a metal material. In this case, the input-side side plate 107 is formed to have such an inner diameter that the input-side side plate 107 can press the outer peripheral portion of the plate surface of the inner ring spring 111 and such an outer diameter that the input-side side plate 107 can press the inner peripheral portion of the plate surface of the outer ring spring 112. That is, the input-side side plate 107 is, at an innermost peripheral portion of a plate surface thereof, formed with an inner ring pressing portion 107a pressing the inner ring spring 111. In addition, at an outermost peripheral portion, an outer ring pressing portion 107b pressing the outer ring spring 112 is formed.

Coupling pin insertion portions 107c and spring housing portions 107d are formed at the plate surface of the input-side side plate 107. The coupling pin insertion portion 107c is a portion through which the coupling pin 108 penetrates. The coupling pin insertion portion 107c includes a circular through-hole having the substantially same outer diameter than that of the coupling pin 108. In the present embodiment, three coupling pin insertion portions 107c are formed at equal intervals along the circumferential direction of the input-side side plate 107. Note that three or less or four or more coupling pin insertion portions 107c may be provided, needless to say.

The spring housing portion 107d is a portion housing the damper member 113 housed in the spring housing portion 102e. The spring housing portion 107d is formed in a cover-equipped long hole shape covering part of the damper member 113 and extending in the circumferential direction of the input-side side plate 107. In this case, both end portions of the damper member 113 elastically contact both end portions of the spring housing portion 107d. In the present embodiment, two spring housing portions 107d are formed between adjacent ones of the three coupling pin insertion portions 107c along the circumferential direction of the input-side side plate 107. Note that two or less or three or more spring housing portions 107d may be provided, needless to say.

The coupling pin 108 is a component for integrally coupling the input rotary body 102 and the clutch outer 101 through the outer side plate 106, the input-side side plate 107, the inner ring spring 111, and the outer ring spring 112. The coupling pin 108 is formed in a rod shape from a metal material. In the present embodiment, the coupling pins 108 include three rivets penetrating the input-side side plate 107 and the clutch outer 101. In this case, each of these three coupling pins 108 penetrates a corresponding one of the coupling pin insertion portions 107c of the input rotary body 102 through a collar 108a formed in a cylindrical shape from a metal material.

The inner ring spring 111 and the outer ring spring 112 are arranged between the input-side side plate 107 and the clutch outer 101. The inner ring spring 111 and the outer ring spring 112 are components for pressing the outer side plate 106 against the input rotary body 102. Each of the inner ring spring 111 and the outer ring spring 112 is formed of multiple overlapping flat plate-shaped annular rings made of spring steel. The inner ring spring 111 is arranged between the projecting portion 102c of the input rotary body 102 and the inner ring pressing portion 107a of the input-side side plate 107 with the inner ring spring 111 being compressed and deformed.

In this case, the inner ring spring 111 is provided at the substantially same radial position as that of an outer peripheral end portion of the side surface 101a of the clutch outer 101. The outer ring spring 112 is arranged between the projecting portion 102c of the input rotary body 102 and the outer ring pressing portion 107b of the input-side side plate 107 with the outer ring spring 112 being compressed and deformed. In this case, the outer ring spring 112 is provided at the substantially same radial position as that of an inner peripheral end portion of the side surface 101a of the clutch outer 101.

The inner ring spring 111 and the outer ring spring 112 may be springs providing the same level of pressing force. Alternatively, the inner ring spring 111 and the outer ring spring 112 may be springs providing different levels of pressing force. Note that the tension of each spring is adjusted such that the pressing force is substantially constant in a region from the inner peripheral side pressing portion 106a to the outer peripheral side pressing portion 106b of the outer side plate 106. The inner ring spring 111 and the outer ring spring 112 are equivalent to a ring spring according to the present invention.

The damper member 113 is a component transmitting the rotary drive force (torque) of the input rotary body 102 to the clutch outer 101 while attenuating fluctuation in such torque. The damper member 113 includes a copper coil spring. The damper members 113 are each arranged in the six spring housing portions 102e, 106f, 107d formed at the same circumferential positions among the input rotary body 102, the outer side plate 106, and the input-side side plate 107. Note that the damper member 113 may include an elastic body made of a rubber material in addition to the coil spring, needless to say.

The first friction plate 114 is an annular flat plate-shaped component to be pressed against a second friction plate 115. The first friction plate 114 includes a thin plate member formed in an annular shape from an aluminum material. In this case, an external gear configured to engage with the internal gear-shaped spline of the clutch outer 101 is formed at an outer peripheral portion of each first friction plate 114. In this configuration of the first friction plate 114, not-shown multiple friction members made of paper pieces are bonded to both surfaces (front and back surfaces) of the first friction plate 114. In addition, a not-shown oil groove is formed between adjacent ones of the friction members. The first friction plates 114 are formed to have the same size and shape for a center clutch 116 and a pressure clutch 117 provided inside the clutch outer 101.

In the clutch outer 101, each of the multiple (nine in the present embodiment) second friction plates 115 is sandwiched by adjacent ones of the first friction plates 114, and is held by the center clutch 116 and the pressure clutch 117. The second friction plate 115 is an annular flat plate-shaped component to be pressed against the first friction plate 114. The second friction plate 115 is formed of a thin plate member punched in an annular shape and made of a steel plate cold commercial (SPCC) material. Not-shown oil grooves holding clutch oil and having a depth of several µm to several tens of µm are formed at both surfaces (front and back surfaces) of each second friction plate 115. In addition, surface hardening treatment is performed for these surfaces for the purpose of improving abrasion resistance.

An internal gear-shaped spline is formed at an inner peripheral portion of each second friction plate 115. The spline engages, by spline fitting, with a plate holding portion 116d formed at the center clutch 116 and a sub-plate holding portion 117c formed at the pressure clutch 117. The second friction plates 115 are formed to have the same size and shape for the center clutch 116 and the pressure clutch 117. Note that the friction members may be provided on the second friction plates 115 instead of the first friction plates 114, needless to say.

The center clutch 116 is a component for housing the second friction plates 115 together with the first friction plates 114. The center clutch 116 transmits the drive force of the engine to a transmission side. The center clutch 116 is formed in a substantially cylindrical shape from an aluminum alloy material. More specifically, the center clutch 116 mainly includes a shaft coupling portion 116a, a ring-shaped intermediate portion 116b, and the plate holding portion 116d which are formed integrally.

The shaft coupling portion 116a is a portion to be coupled to the shaft 118 while being fitted in the pressure clutch 117. The shaft coupling portion 116a is formed in a cylindrical shape extending in the axial direction at a center portion of the center clutch 116. An internal gear-shaped spline is formed at an inner peripheral surface of the shaft coupling portion 116a along the axial direction of the center clutch 116. The shaft 118 engages with such a spline by spline fitting. That is, the center clutch 116 is at a position concentric with the clutch outer 101 and the shaft 118, and rotates integrally with the shaft 118.

The ring-shaped intermediate portion 116b is a flange-shaped portion formed between the shaft coupling portion 116a and the plate holding portion 116d. The ring-shaped intermediate portion 116b is formed with three through-holes along the circumferential direction. Later-described three tubular support rods 117b each penetrate these through-holes.

Note that the ring-shaped intermediate portion 116b is formed with a trapezoidal cam body 116c forming an A&S (the registered trademark) mechanism and having a cam surface which is an inclined surface. The A&S (the registered trademark) mechanism generates assist torque as force for increasing pressure contact force between the first friction plate 114 and the second friction plate 115 and slipper torque as force for promptly separating the first friction plate 114 and the second friction plate 115 to bring a half-clutch state. The A&S (the registered trademark) mechanism including the cam body 114c does not directly relate to the present invention. For this reason, description thereof will be omitted. Moreover, the ring-shaped intermediate portion 114b may be formed without the A&S (the registered trademark) mechanism.

The plate holding portion 116d is a portion holding part of the multiple second friction plates 115 together with the first friction plates 114. The plate holding portion 116d is formed in a cylindrical shape extending in the axial direction at an outer edge portion of the center clutch 116. An outer peripheral portion of the plate holding portion 116d includes an external gear-shaped spline. The plate holding portion 116d holds the alternately-arranged first and second friction plates 114, 115 such that the second friction plates 115 and the first friction plates 114 are displaceable along the axial direction of the center clutch 116 and are rotatable integrally with the center clutch 116.

A plate receiving portion 116e is formed at a tip end portion of the plate holding portion 116d on the right side as viewed in the figure. The plate receiving portion 116e is a portion receiving the second friction plates 115 and the first friction plates 114 pressed against the pressure clutch 117 to sandwich the second friction plates 115 and the first friction plates 114 between the plate receiving portion 116e and the pressure clutch 117. The plate receiving portion 116e is formed by the tip end portion of the cylindrical plate holding portion 116d projecting in a flange shape to the outer side in the radial direction.

The pressure clutch 117 is a component for pressing the first friction plate 114 such that the first friction plates 114 and the second friction plates 115 closely contact each other. The pressure clutch 117 is formed in a substantially discoid shape with the substantially same outer diameter than the outer diameter of the second friction plate 115 from an aluminum alloy material. More specifically, the pressure clutch 117 mainly includes a ring-shaped intermediate portion 117a and the sub-plate holding portion 117c which are formed integrally.

The ring-shaped intermediate portion 117a is a circular ring-shaped portion forming an inner peripheral portion of the pressure clutch 117. The three tubular support rods 117b are formed along the circumferential direction at the ring-shaped intermediate portion 117a. An innermost peripheral portion of the ring-shaped intermediate portion 117a is slidably fitted onto an outer peripheral surface of the shaft coupling portion 116a of the center clutch 116. With this configuration, the pressure clutch 117 is rotatably provided independently of the center clutch 116 and the shaft 118 at a position concentric with the clutch outer 101, the center clutch 116, and the shaft 118.

The three tubular support rods 117b are cylindrical portions extending in a columnar shape in the axial direction of the center clutch 116 to support a lifter plate 120. An inner peripheral portion of the tubular support rod 117b is formed with an internal thread. These three tubular support rods 117b are formed equally along the circumferential direction of the pressure clutch 117.

The sub-plate holding portion 117c is a portion holding other part of the multiple second friction plates 115 together with the first friction plates 114. The sub-plate holding portion 117c is formed in a cylindrical shape extending in the axial direction of an outer edge portion of the pressure clutch 117. An outer peripheral portion of the sub-plate holding portion 117c includes an external gear-shaped spline. The sub-plate holding portion 117c holds the alternately-arranged first and second friction plates 114, 115 such that the second friction plates 115 and the first friction plates 114 are displaceable along the axial direction of the pressure clutch 117 and are rotatable integrally with the pressure clutch 117. A plate pressing portion 117d is formed at a tip end portion of the sub-plate holding portion 117c.

The plate pressing portion 117d is a component pressing the second friction plates 115 and the first friction plates 114 held by the sub-plate holding portion 117c toward a plate receiving portion 116e side. With this configuration, the plate pressing portion 117d causes the second friction plates 115 and the first friction plates 114 to closely contact each other with a high pressure. The plate pressing portion 117d is formed by a base portion of the cylindrical sub-plate holding portion 117c projecting in a flange shape to the outer side in the radial direction. Note that a cam body 117e forming the above-described A&S (the registered trademark) mechanism is formed between adjacent ones of the three tubular support rods 117b at the ring-shaped intermediate portion 117a.

The shaft 118 is a shaft body formed in a hollow shape. One (the right side as viewed in the figure) end side of the shaft body rotatably supports the input rotary body 102 and the clutch outer 101 through the sleeve 103, and in a fixed manner, supports the spline-fitted center clutch 116 through a nut (not shown). The other (the left side as viewed in the figure) end side of the shaft 118 is coupled to the transmission (not shown) of the two-wheeled vehicle. That is, the shaft 118 is equivalent to a driven shaft in the present invention. Note that in Fig. 1, the shaft 118 is indicated by a chain double-dashed line.

The lifter plate 120 is a component for reciprocatably displacing the pressure clutch 117 in the axial direction. The lifter plate 120 is formed in a cylindrical shape from a metal material. The lifter plate 120 is, at an outer peripheral portion thereof, slidably fitted in an inner peripheral surface of the plate holding portion 116d, and is fixed to tip end portions of the three tubular support rods 117b with bolts. In this case, the lifter plate 120 compresses and deforms clutch springs 122, and is attached onto the tubular support rods 117b.

The lifter plate 120 is pressed against a release pin 121 forming a clutch release mechanism through a bearing. Accordingly, the lifter plate 120 displaces the pressure clutch 117 to an input rotary body 102 side. The clutch release mechanism described herein is a mechanical device configured to press the release pin 121 to a shaft 118 side by operation of a clutch operation lever (not shown) by a driver of a self-propelled vehicle on which the clutch device 100 is mounted. Note that in Fig. 1, the release pin 121 is indicated by a chain double-dashed line.

The clutch spring 122 is an elastic body for pressing the pressure clutch 117 to a center clutch 116 side. With this configuration, the plate pressing portion 117d of the pressure clutch 117 is pressed against the first friction plate 114. The clutch spring 122 includes a coil spring formed in a spiral shape from spring steel. The clutch spring 122 is arranged between adjacent ones of the three tubular support rods 117b.

The inside of the clutch device 100 is filled with a predetermined amount of clutch oil (not shown). The clutch oil is mainly supplied to among the first friction plates 114 and the second friction plates 115, thereby absorbing friction heat generated thereamong and preventing abrasion of the friction members. That is, the clutch device 100 is a so-called wet multiplate friction clutch device.

### (Actuation of Clutch Device 100)

Next, actuation of the clutch device 100 configured as described above will be described. As described above, the clutch device 100 is arranged between the engine and the transmission in the vehicle. By operation of the clutch operation lever by the driver of the vehicle, the clutch device 100 transmits the drive force of the engine to the transmission or blocks such force transmission.

Specifically, in a case where the driver (not shown) of the vehicle does not operate the clutch operation lever (not shown), the clutch release mechanism (not shown) does not press the release pin 121 in the clutch device 100. Thus, the pressure clutch 117 presses the first friction plate 114 by elastic force of the clutch springs 122. Accordingly, the first friction plates 114 and the second friction plates 115 are pressed against each other and are friction-coupled to each other in the center clutch 116. This brings a clutch ON state, and the shaft 118 is rotatably driven. That is, the rotary drive force of the motor is transmitted to the center clutch 116, and accordingly, the shaft 118 is rotatably driven.

In such a clutch ON state, the rotary drive force transmitted from the motor to the input rotary body 102 is transmitted to the clutch outer 101 through the outer side plate 106. In this case, the inner peripheral side pressing portion 106a is formed at the outer side plate 106 on such a line that pressing force F_{I} of the inner ring spring 111 acts. Moreover, the outer peripheral side pressing portion 106b is formed on such a line that pressing force Fo of the outer ring spring 112 acts. Thus, the force MF_{I} of close contact between the input rotary body 102 and the outer side plate 106 on the above-described line and the force MFo of close contact between the outer side plate 106 and the clutch outer 101 on the above-described line are increased. With this configuration, an uneven magnitude of transmitted rotary drive force in the radial direction can be reduced. Specifically, a difference in a transmitted rotary drive force amount between an innermost friction-contact portion and an outermost friction-contact portion of the outer side plate 106 can be reduced.

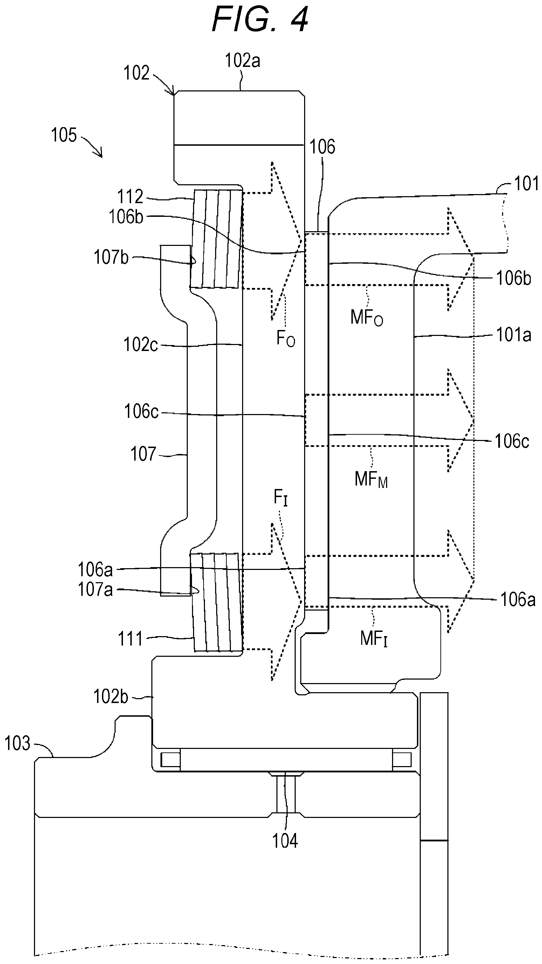

The outer side plate 106 has the radial pressing portions 106c continuously connecting the inner peripheral side pressing portion 106a and the outer peripheral side pressing portion 106b in the radial direction. Thus, the close contact force MF_{M} between the inner peripheral side pressing portion 106a and the outer peripheral side pressing portion 106b is uniformized. With this configuration, an uneven magnitude of transmitted rotary drive force in the radial direction can be reduced. Specifically, a difference in the transmitted rotary drive force amount in a region between the innermost friction-contact portion and the outermost friction-contact portion of the outer side plate 106 can be reduced. With this configuration, the clutch device 100 is configured so that the rotary drive force transmitted from the motor to the input rotary body 102 can be smoothly transmitted to the clutch outer 101. Note that in Fig. 4, the magnitude of the close contact force MF_{I}, MFo, MF_{M} is shown in an exaggerated manner. Moreover, Fig. 4 shows part of the section of a portion, where no coupling pins 108 are present, of the clutch device 100.

In a case where the number of rotations of a motor side falls below the number of rotations of a drive wheel side in the clutch ON state, the clutch springs 122 are compressed and deformed. Accordingly, the clutch outer 101 rotates relative to the input rotary body 102 through the outer side plate 106. In this case, the clutch device 100 is configured so that the rotary drive force transmitted from the motor to the input rotary body 102 can be smoothly transmitted to the clutch outer 101.

On the other hand, in a case where the driver of the vehicle has operated the clutch operation lever in the clutch ON state, the clutch release mechanism (not shown) presses the release pin 121 in the clutch device 100. Accordingly, the pressure clutch 117 displaces against the elastic force of the clutch springs 122 in the direction of separating from the center clutch 116. Accordingly, the first friction plates 114 and the second friction plates 115 friction-coupled to each other are released from each other in the center clutch 116. This brings a clutch OFF state. Thus, rotary drive is attenuated. Alternatively, rotary drive is stopped. That is, the rotary drive force of the motor is blocked from the center clutch 116. The clutch device 100 is configured so that in the clutch OFF state, the rotary drive force transmitted from the motor to the input rotary body 102 can be also smoothly transmitted to the clutch outer 101.

In a case where the driver releases the clutch operation lever in the clutch OFF state, the lifter plate 120 pressed by the clutch release mechanism (not shown) through the release pin 121 is released. Accordingly, the pressure clutch 117 displaces in the direction of approaching the center clutch 116 by the elastic force of the clutch springs 122. The clutch device 100 is configured so that in the course of transitioning from the clutch OFF state to the clutch ON state, the rotary drive force transmitted from the motor to the input rotary body 102 can be also smoothly transmitted to the clutch outer 101.

As can be understood from description of actuation above, the inner ring spring 111 and the outer ring spring 112 configured to press the outer side plate 106 against the input rotary body 102 are, in the clutch device 100, provided on the inner peripheral side and the outer peripheral side in the radial direction of the outer side plate 106 according to the above-described embodiment. In addition, the outer side plate 106 provided in the clutch device 100 has, at the positions facing these ring springs 111, 112, the inner peripheral side pressing portion 106a to be pressed against the input rotary body 102 and the outer peripheral side pressing portion 106b to be pressed against the clutch outer 101. With this configuration, the input rotary body 102 and the outer side plate 106 closely contact each other on the inner peripheral side and the outer peripheral side in the radial direction of the outer side plate 106 by the ring springs 111, 112 in the clutch device 100. Thus, the degree of close contact between these components is improved. Moreover, non-uniformity in a load from the ring springs 111, 112 between the inner peripheral side and the outer peripheral side is reduced. Further, non-uniformity in the coefficient of friction in the radial direction of the outer side plate 106 is reduced. As a result, in the clutch device 100, the rotary drive force of the input rotary body 102 is smoothly transmitted to the clutch outer 101. Thus, vibration due to transmission of the rotary drive force from the motor can be reduced.

Further, embodiments of the present invention are not limited to one described above. Various changes can be made without departing from the object of the present invention.

For example, in the above-described embodiment, the inner peripheral side pressing portion 106a and the outer peripheral side pressing portion 106b are formed to have a size of equal to or greater than 40% of the total area of contact of the outer side plate 106 with the input rotary body 102 and the clutch outer 101. With this configuration, the clutch device 100 is configured so that a contact surface pressure can be uniformized at the surfaces of the outer side plate 106 contacting the input rotary body 102 and the clutch outer 101. Moreover, the non-uniformity in the load from the inner ring spring 111 and the outer ring spring 112 is reduced. Accordingly, the vibration due to transmission of the rotary drive force from the motor can be reduced. However, the inner peripheral side pressing portion 106a and the outer peripheral side pressing portion 106b may be formed to have a size of less than 40% of the total area of contact of the outer side plate 106 with the input rotary body 102 and the clutch outer 101. In this case, non-uniformity in the contact surface pressure can be also reduced.

In the above-described embodiment, the inner peripheral side pressing portion 106a, the outer peripheral side pressing portion 106b, and the radial pressing portions 106c are formed to have a size of equal to or greater than 70% of the total area of contact of the outer side plate 106 with the input rotary body 102 and the clutch outer 101. With this configuration, the clutch device 100 is configured so that the contact surface pressure can be further uniformized at the surfaces of the outer side plate 106 contacting the input rotary body 102 and the clutch outer 101. Moreover, the non-uniformity in the load from the inner ring spring 111 and the outer ring spring 112 is reduced. Accordingly, the vibration due to transmission of the rotary drive force from the motor can be reduced. However, the inner peripheral side pressing portion 106a and the outer peripheral side pressing portion 106b may be formed to have a size of less than at least 70% of the total area of contact of the outer side plate 106 with the input rotary body 102 and the clutch outer 101. In this case, the non-uniformity in the contact surface pressure can be also reduced.

In the above-described embodiment, the radial pressing portions 106c are provided in the configuration of the outer side plate 106. However, the radial pressing portions 106c can be omitted from the configuration of the outer side plate 106. In this case, the outer side plate 106 may be formed such that the inner peripheral side pressing portion 106a and the outer peripheral side pressing portion 106b protrude from the plate surface of the outer side plate 106. With this configuration, the outer side plate 106 can be formed without the radial pressing portions 106c. Note that the auxiliary pressing portions 106d can be also similarly omitted from the configuration of the outer side plate 106.

In the above-described embodiment, the radial pressing portion 106c is formed wider than the circumferential widths of the inner peripheral side pressing portion 106a and the outer peripheral side pressing portion 106b. With this configuration, a surface pressure at a portion between the inner peripheral side pressing portion 106a and the outer peripheral side pressing portion 106b of the outer side plate 106, i.e., a portion not on such a line that the pressing force of the inner ring spring 111 and the outer ring spring 112 acts, is improved. Accordingly, the non-uniformity in the contact surface pressure can be reduced. However, the radial pressing portion 106c may be formed to have a width narrower than the circumferential widths of the inner peripheral side pressing portion 106a and the outer peripheral side pressing portion 106b.

In the above-described embodiment, the radial pressing portions 106c are formed with the same shapes at the same positions among the units, taking, as the unit, the portion between adjacent ones of the three coupling pins 108 provided along the circumferential direction of the outer side plate 106. With this configuration, the clutch device 100 is configured so that friction properties and lubricant oil behavior between adjacent ones of the coupling pins 108 in the circumferential direction can be changed. Accordingly, monotonous or uneven action of the friction properties upon sliding or stop of the outer side plate 106 can be reduced. At the same time, the friction properties can be uniformized across the entirety of the outer side plate 106. However, the radial pressing portions 106c may be regularly or irregularly formed along the circumferential direction of the outer side plate 106 regardless of the coupling pins 108.

In the above-described embodiment, the multiple radial pressing portions 106c are discontinuously formed along the radial direction of the outer side plate 106. However, only one radial pressing portion 106c may be formed at part of the outer side plate 106 along the radial direction.

In the above-described embodiment, some of the radial pressing portions 106c are configured such that the circumferential width is different between adjacent two of the radial pressing portions 106c in the circumferential direction of the outer side plate 106. However, the radial pressing portions 106c may be formed in the circumferential direction of the outer side plate 106 to have a constant circumferential width, i.e., the same size and shape, at the same radial position.

In the above-described embodiment, the continuously annular inner peripheral side pressing portion 106a and outer peripheral side pressing portion 106b are formed along the circumferential direction of the outer side plate 106. However, discontinuous annular inner peripheral side pressing portion 106a and outer peripheral side pressing portion 106b may be formed along the circumferential direction of the outer side plate 106.

In the above-described embodiment, the inner ring spring 111 and the outer ring spring 112 are provided between the input rotary body 102 and the input-side side plate 107. However, it may only be required that the inner ring spring 111 and the outer ring spring 112 are arranged between the input-side side plate 107 and the clutch outer 101 to press the outer side plate 106 against the input rotary body 102. Thus, the inner ring spring 111 and the outer ring spring 112 may be arranged between the outer side plate 106 and the clutch outer 101, for example. That is, it may only be required that the outer side plate 106 is provided to be directly or indirectly pressed against the input rotary body 102 and the clutch outer 101.

### LIST OF REFERENCE SIGNS

- F_{I}: Pressing Force of Inner Ring Spring
- F_{O}: Pressing Force of Outer Ring Spring
- MF_{I}: Force of Close Contact of Input Rotary Body and Clutch Outer with Inner Peripheral Portion of Outer Side Plate
- MF_{O}: Force of Close Contact of Input Rotary Body and Clutch Outer with Outer Peripheral Portion of Outer Side Plate
- MF_{M}: Force of Close Contact of Input Rotary Body and Clutch Outer with Intermediate Portion of Outer Side Plate
- 100: Clutch Device
- 101: Clutch Outer
- 101a: Side Surface
- 102: Input Rotary Body
- 102a: Tooth Portion
- 102b: Boss Portion
- 102c: Projecting Portion
- 102d: Coupling Pin Insertion Portion
- 102e: Spring Housing Portion
- 103: Sleeve
- 104: Needle Bearing
- 105: Damper Mechanism
- 106: Outer Side Plate
- 106a: Inner Peripheral Side Pressing Portion
- 106b: Outer Peripheral Side Pressing Portion
- 106c: Radial Pressing Portion
- 106d: Auxiliary Pressing Portion
- 106e: Coupling Pin Insertion Portion
- 106f: Spring Housing Portion
- 107: Input-Side Side Plate
- 107a: Inner Ring Pressing Portion
- 107b: Outer Ring Pressing Portion
- 107c: Coupling Pin Insertion Portion
- 107d: Spring Housing Portion
- 108: Coupling Pin
- 108a: Collar
- 111: Inner Ring Spring
- 112: Outer Ring Spring
- 113: Damper Member
- 114: First Friction Plate
- 115: Second Friction Plate
- 116: Center Clutch
- 116a: Shaft Coupling Portion
- 116b: Ring-Shaped Intermediate Portion
- 116c: Cam Body
- 116d: Plate Holding Portion
- 116e: Plate Receiving Portion
- 117: Pressure Clutch
- 117a: Ring-Shaped Intermediate Portion
- 117b: Tubular Support Rod
- 117c: Sub-Plate Holding Portion
- 117d: Plate Pressing Portion
- 117e: Cam Body
- 118: Shaft
- 120: Lifter Plate
- 121: Release Pin
- 122: Clutch Spring

## Claims

1. A clutch device for transmitting rotary drive force of a driving shaft to a driven shaft or blocking force transmission, comprising:
an input rotary body to be rotatably driven together with the driving shaft by rotary drive of the driving shaft;
a clutch outer holding a first friction plate arranged facing a second friction plate rotatably driven together with the driven shaft and rotatably driven by rotary drive of the input rotary body and formed in a bottomed tubular shape; and
a damper mechanism allowing relative rotation of the input rotary body and the clutch outer and transmitting rotary drive force of the input rotary body to the clutch outer,
wherein the damper mechanism includes
an outer side plate formed in an annular flat plate shape and arranged between the input rotary body and the clutch outer,
an input-side side plate formed in an annular flat plate shape and arranged facing the outer side plate through the input rotary body,
a coupling pin formed in a shape of a pin penetrating the input-side side plate, the input rotary body, and the outer side plate and coupling the input rotary body and the clutch outer,
a ring spring formed in an annular flat plate shape, arranged between the input-side side plate and the clutch outer, and pressing the outer side plate against the input rotary body, and
a damper member elastically coupling at least one of the input-side side plate or the outer side plate and the input rotary body,
the ring spring is provided on each of an inner peripheral side and an outer peripheral side of the outer side plate in a radial direction thereof, and
the outer side plate includes
an inner peripheral side pressing portion pressed against the input rotary body and the clutch outer at a position facing the inner peripheral side ring spring, and
an outer peripheral side pressing portion pressed against the input rotary body and the clutch outer at a position facing the outer peripheral side ring spring.

2. The clutch device according to claim 1, wherein
at the outer side plate, a total of an area of the inner peripheral side pressing portion and an area of the outer peripheral side pressing portion is equal to or greater than 40% of a total area of contact of the outer side plate with the input rotary body and the clutch outer.

3. The clutch device according to claim 1 or 2, wherein
the outer side plate includes a radial pressing portion continuously connecting the inner peripheral side pressing portion and the outer peripheral side pressing portion in the radial direction of the outer side plate.

4. The clutch device according to claim 3, wherein
at the outer side plate,
a total of the area of the inner peripheral side pressing portion, the area of the outer peripheral side pressing portion, and an area of the radial pressing portion is equal to or greater than 70% of the total area of contact of the outer side plate with the input rotary body and the clutch outer.

5. The clutch device according to claim 3 or 4, wherein
the radial pressing portion is formed wider than a width of the inner peripheral side pressing portion and a width of the outer peripheral side pressing portion.

6. The clutch device according to any one of claims 3 to 5, wherein
the radial pressing portion includes multiple radial pressing portions discontinuously formed along the radial direction of the outer side plate.

7. The clutch device according to claim 6, wherein
adjacent two of the radial pressing portions in a circumferential direction of the outer side plate have different widths in the circumferential direction.

8. The clutch device according to any one of claims 3 to 7, wherein
the coupling pin includes multiple coupling pins provided along the circumferential direction of the outer side plate, and
the radial pressing portions are formed with identical shapes at identical positions among units, taking, as each unit, a portion between adjacent ones of the multiple coupling pins provided along the circumferential direction of the outer side plate.
